# EUROPÄISCHE PATENTANMELDUNG

(11) **EP 1 279 881 A2**
(43) Veröffentlichungstag der Anmeldung: **29.01.2003**
(21) Anmeldenummer: 02016822.5
(22) Anmeldetag: 29.07.2002
(51) Int. Cl.: F16L 55/11

(54) **Baustopfen**

(30) Priorität: 28.07.2001 DE 10136868; 06.09.2001 DE 10143769
(71) Anmelder: Kokud, Erkan, 72622 Nürtingen (DE)
(72) Erfinder: Kokud, Erkan, 72622 Nürtingen (DE)
(74) Vertreter: Schramm, Michael, Dr.

(57) **Zusammenfassung**

Es wird ein Permanent-Baustopfen (1) für eine Öffnung in einer Rohrleitungsinstallation zur Verwendung als Zwischenstück vorgeschlagen mit einer in Längsrichtung durchgehenden Öffnung (2), einem an einem Ende angebrachten Außengewinde (4) zur Befestigung an einer Rohrleitungsinstallation, einem innerhalb der durchgehenden Öffnung (2) des Baustopfens (1) vorhandenen Innengewinde (9) und in regelmäßigen Abständen angebrachten Markierungen (7) an der Aussenseite (6) des Baustopfens.

## Beschreibung

Die Erfindung betrifft einen flexibel verwendbaren Permanent-Baustopfen für ein Rohrleitungssystem nach Anspruch 1.

Im Stand der Technik sind im wesentlichen zwei verschiedene Arten von Baustopfen bekannt: Temporär-Baustopfen und Permanent-Baustopfen. Sie werden im Rahmen der Installationsarbeiten für Rohre, insbesondere Wasserrohre, im Bauwesen eingesetzt.

Temporär-Baustopfen bestehen im wesentlichen aus einem fest verschlossenem Gewindeteil - in der Regel aus Messing - und einem daran angebrachten, konisch zulaufenden zylindrischen Aufsatz, der regelmäßig aus Kunststoff gefertigt ist. Nach der Montage des Rohrleitungssystems wird ein solcher Temporär-Baustopfen auf die Auslässe des Rohrleitungssystemes dichtend aufgeschraubt. Anschließend findet die Druckprüfung des Rohrleitungssystems statt; danach wird die Wand fertig verkleidet, beispielsweise durch Aufbringen von Putz und/oder Fliesen. Der zylindrische Aufsatz des Baustopfens wird dabei quasi in die Wand integriert.

Nach Fertigstellung der Wandverkleidung wird der Temporär-Baustopfen durch Drehung vom Rohrleitungssystem gelöst, so daß das Ende des festen Rohrleitungssystemes im Inneren der Wand endet. Der Abstand zwischen dem Ende des Rohrleitungssystemes und der Wandoberfläche wird daraufhin durch Einschrauben von Verbindungsstücken überbrückt, die es in verschiedenen Längen gibt. Diese sind typischerweise aus Messing gefertigt. Da der Abstand zwischen Wandoberfläche und dem Ende des Rohrleitungssystemes bei Beginn der Putzarbeiten meist nicht feststeht, ist es nicht möglich, diese Verbindungsstücke von vorneherein zu verwenden, da sie möglicherweise zu weit aus der Wand hervorragen oder zu weit in der Wand verschwinden würden. Darüber hinaus sind die Verbindungsstücke wesentlich teurer und empfindlicher als die üblichen Temporär-Baustopfen.

Eine spezielle Ausführungsform eines Temporär-Baustopfens zeigt EP 203 584. Der dort beschriebene Baustopfen weist eine durchgehende Öffnung auf. An der vom Rohrleitungssystem weg zeigenden Seite eines Verbindungsstückes ist ein Ventil angebracht, welches eine Spülung des Rohrleitungssystemes nach der Druckprüfung ermöglicht, ohne den Baustopfen wechseln zu müssen.

Die Verwendung von Temporär-Baustopfen hat jedoch eine Reihe von Nachteilen. So besteht bei der Entfernung des Baustopfens, insbesondere wenn das Ende des Baustopfens teilweise mit der Oberfläche der fertig verkleideten Wand abschließt, das Risiko, dass diese bei der Entfernung beschädigt wird. Weiterhin ist es notwendig, die Verbindungsstücke, die anschließend eingeschraubt werden, im Inneren der Wand mit dem Rohrleitungssystem zu verbinden. Dabei kann es zu Undichtigkeiten kommen, die regelmäßig, insbesondere wenn sie nicht sofort entdeckt werden, zu erheblichen Wasserschäden führen.

Die andere Gruppe von Baustopfen sind Permanent-Baustopfen. Diese verbleiben nach Anbringung der Wandverkleidung in der Wand und werden bei Bedarf gekürzt.

Ein solcher Permanent-Baustopfen ist in der DE 30 12 104 beschrieben. Dieser wird einmalig mit dem Rohrleitungssystem verbunden und verbleibt nach Abschluß der Putzarbeiten in der Wand. Zur weiteren Erhöhung der Festigkeit ist der Permanent-Baustopfen nach DE 30 12 104 auf mindestens einer Seite abgeflacht, so dass er sich nach Abschluß der Putzarbeiten nicht mehr in der Wand bewegen läßt, was dessen Festigkeit erhöht. Die notwenige Länge erhält dieser Permanent-Baustopfen durch Kürzung des aus der Wand hervorragenden Teiles mittels eines geeigneten Werkzeuges.

Nachteil dieses Permanent-Baustopfens ist, daß die Kürzung des aus der Wand herausragenden Teiles nach der Montage schwierig in der richtigen Länge auszuführen ist. Der Permanent-Baustopfen wird nämlich nach Kürzung und Verbindung mit der anzuschließenden Armatur - etwa einem Wasserhahn oder einem Ventil - mit einer Rosette abgedeckt. Diese Rosette weist eine vorbestimmte Tiefe auf - meist 5 oder 10 mm - innerhalb derer ein überstehendes Ende des Permanent-Baustopfens von der Rosette abgedeckt werden kann. Bei den Permanent-Baustopfen nach dem Stand der Technik ist dieser Abstand schwierig richtig abzuschätzen. Weiterhin ist es schwierig, geeignete Schneidwerkzeuge wirksam an einer definierten Stelle anzusetzen. Dies ist der Grund, warum die Permanent-Baustopfen nach der DE 30 12 104 sich nicht durchgesetzt haben.

Im Übrigen kann der fest mit der Wand verbundene Permanent-Baustopfen nach dem Stand der Technik nicht weiter als bis zur Oberfäche der Wandverkleidung gekürzt werden, ohne die Wandverkleidung substantiell zu beschädigen.

Ein weiterer Nachteil des Permanent-Baustopfens nach dem Stand der Technik ist dessen Reperaturunfreundlichkeit. Durch die feste Verankerung mit der Wand kann er ohne Beschädigung der Wand nicht mehr entfernt werden, etwa wenn Undichtigkeiten an der Verbindung zum Rohrleitungssystem auftreten oder wenn der ganze Permanent-Baustopfen entfernt werden muß, etwa weil dessen Gewinde zur Aufnahme der Armaturen beschädigt ist.

Der Erfindung liegt daher die Aufgabe zugrunde, einen Baustopfen zur Verfügung zu stellen, der die beschriebenen Nachteile vermeidet. Diese Aufgabe wird durch einen Baustopfen nach Anspruch 1 gelöst.

Erfindungsgemäß wird ein Permanent-Baustopfen für eine Rohrleitungsinstallation zur Verfügung gestellt, der eine durchgehende Öffnung aufweist und daher als Zwischenstück verwendet werden kann. Dieser Permanent-Baustopfen weist eine durchgehende Öffnung in Längsrichtung auf, sowie an einem Ende ein Außengewinde zur Befestigung an einer Rohrleitungsinstallation. Die durchgehende Öffnung des Baustopfens weist ein Innengewinde, vorzugsweise beginnend an dem dem Außengewinde gegenüberliegenden Ende des Baustopfens, auf und an der Aussenseite des Baustopfens sind Markierungen in regelmäßigen Abständen angebracht. Die Markierungen weisen vorteilhafterweise regelmäßige Abstände zwischen 5 mm und 10 mm auf. Dies sind die typischen Toleranzen, die von häufig verwendeten Rosetten noch abgedeckt werden können und die recht genau eingehalten werden müssen. Damit ist sichergestellt, daß eine Kürzung des überstehenden Teiles des erfindungsgemäßen Permanent-Baustopfens auf eine passende Länge sicher und problemfrei gewährleistet ist. Dies ist nicht trivial, denn auf Baustellen arbeitet häufig auch unqualifiziertes Personal. Nach der Erfindung ist keine Messung mehr erforderlich, sondern das Personal kann den überstehenden Teil des erfindungsgemäßen Baustopfens unmittelbar an der ersten, über die Wand hinausragenden Markierung abtrennen. Dies vermeidet eine Vielzahl von Fehlern, die wiederum einen hohen Materialverschleiß durch Austausch beschädigter oder falsch bearbeiteter Teile verursachen. Besonders vorteilhaft ist es dabei, wenn die Markierungen als Ringnuten ausgeprägt sind, die das Angreifen eines Schneidwerkzeuges zum Kürzen erleichtern, da ein solches Schneidwerkzeug auf diese Art sicher angesetzt werden kann.

Vorteilhaft ist es weiterhin, wenn die Außenumfangsfläche des Permanent-Baustopfens im wesentlichen zylindrisch aufgebaut ist. Dadurch ist der Baustopfen auch nach Fertigstellung der Wandverkleidung drehbar. Dies hat zur Folge, dass er so flexibel einsetzbar ist, dass er im Gegensatz zu den Permanent-Baustopfen nach dem Stand der Technik auch nach Einbau zu Reperaturzwecken oder aus sonstigen Gründen entfernt werden kann. Darüber hinaus ermöglicht der im wesentlichen zylindrische Aufbau die Verwendung anderer Schneidwerkzeuge, denn hiermit ist auch eine Fräse verwendbar, die auf der inneren Öffnung zur Führung aufgesetzt werden kann und dann den überstehenden Teil des Baustopfens abfräst. Bei dem zylindrischen Aufbau kann sogar der in die Wand hineinreichende Teil abgefräst werden, wenn die Fräse entsprechend dimensioniert ist. Bei einem Permanent-Baustopfen nach dem Stand der Technik ist dies nicht möglich, da die Fräse an den abgeflachten Seitenteilen hängen bleiben würde.

Die Handhabung des erfindungsgemässen Permanent-Baustopfens vereinfacht sich weiter, wenn an dem dem mit Außengewinde versehenen Ende in Längsrichtung gegenüberliegende Ende Kanten angebracht sind, deren Querschnittsfläche nicht über die Querschnittsfläche des übrigen Baustopfens hinausragt. Dadurch ist der Ansatz von Werkzeugen wie etwa Schraubenschlüssel möglich, ohne die Drehbarkeit in der fertigen Wand ernsthaft zu behindern. Auch so kann ein vollständig eingeputzter Permanent-Baustopfen nach der Erfindung noch zerstörungsfrei entfernt und ausgetauscht werden. Dieser Austausch wird weiter erleichtert, wenn die Kanten als Sechskant ausgebildet sind und / oder wobei Teile der Innenseiten Kanten zur Aufnahme von Drehhilfen aufweisen.

Weiterhin ist es günstig, wenn der mit dem Außengewinde versehene Teil des Bohrstopfens als Zapfen mit kleinerem Außendurchmesser als der restliche Baustopfen ausgebildet ist, insbesondere wenn das Innengewinde des Baustopfens mit dessen das Außengewinde so kompatibel ist, dass das Außengewinde eines weiteren Baustopfens in das Innengewinde des anderen Baustopfens abdichtend einschraubbar ist. Damit ist es möglich, durch Verbindung mehrerer Baustopfen eine nahezu beliebige Verlängerung zu erreichen, ohne erfindungsgemäße Baustopfen verschiedener Länge zur Verfügung stellen zu müssen.

Zür Erzielung einer ausreichenden Flexibilität im Einsatz ist es weiterhin vorteilhaft, wenn sich das Innengewinde des Baustopfens über den wesentlichen Teil der Öffnung des Baustopfens erstreckt. Als Material für den Baustopfen hat sich Hart-PVC als günstig erwiesen, wobei auch nur Teile des Baustopfens aus diesem Material bestehen können.

Erfindungsgemäß wird auch ein Baustopfen zur Verfügung gestellt, an dem an dem dem Außengewinde gegenüberliegenden Ende ein Verschlußstopfen abdichtbar anbringbar ist. Dieser ist vorzugsweise mittels eines Gewindes anbringbar und weist mindestens zwei Kanten, vorzugsweise einen Sechskant, auf. Zur Erhaltung der Drehbarkeit des gesamten Baustopfens ist es darüber hinaus günstig, wenn die Querschnittsfläche des Verschlußstopfens nicht über die Querschnittsfläche des Baustopfens hinausragt. Als Drehilfe können weiterhin Vorrichtungen zur Aufnahme von Drehhilfen vorhanden sein, vorzugsweise Schlitze oder Innensechskantlöcher zur Aufnahme von Schraubendrehern oder Imbusschlüsseln.

Die Erfindung wird nun anhand schematischer Darstellungen zu einem Ausführungsbeispiel mit der nachfolgenden Beschreibung näher erläutert. Es zeigt:
- **Figur 1**: Einen Baustopfen im Längsschnitt;
- **Figur 2**: Eine Verschlusskappe für den Baustopfen nach Figur 1.

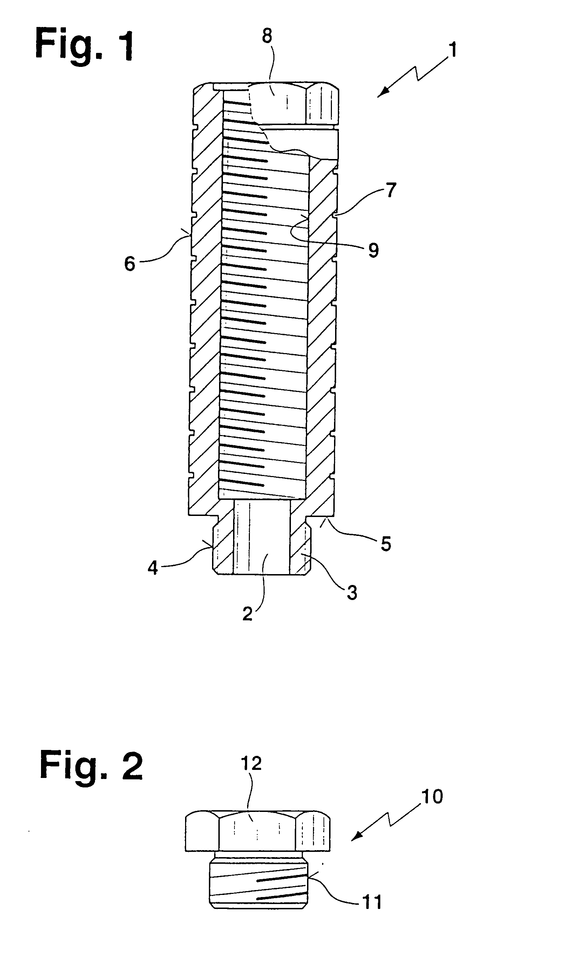

**Figur 1** zeigt einen erfindungsgemäßen Baustopfen **1**. Der Baustopfen **1** weist an seinem unteren Ende einen Absatz **5** auf, an dem ein Zapfen **3** befestigt ist. Der Zapfen **3** weist ein Außengewinde **4** auf und ist innen im Bereich einer im wesentlichen zylindrischen Öffnung **2** hohl. Der übrige Teil des Baustopfens ist ebenfalls im wesentlichen zylinderförmig aufgebaut und ist innen ebenfalls im wesentlichen hohl. Er weist ein Innengewinde **9** auf, welches vorzugsweise so ausgebildet ist, dass es mit dem Außengewinde **4** eines anderen Baustopfens, eventuell unter Zuhilfenahme einer Dichtung, abdichtend und lösbar verbunden werden kann. Der Absatz **5** kann dabei als Dichtfläche dienen. Es ist aber auch denkbar, dass statt des Außengewindes **4** ein Bajonettverschluss oder ähnliche Verschlusssysteme vorhanden sind, die kompatibel zu üblichen Rohrverbindungen sind. Die im wesentlichen zylinderförmige Außenseite **6** des Bohrstopfens **1** weist in definierten Abständen angebrachte Markierungen, vorzugsweise Ringnuten **7** auf. Der Abstand dieser Ringnuten voneinander beträgt günstigerweise 5 mm, aber auch Abstände von 1 cm haben sich als sehr praktikabel erwiesen.

Der Baustopfen **1** wird dabei regelmässig bei der Installation von Rohrleitungen, beispielsweise in Häusern und Wohnungen, eingesetzt. Er weist vorzugsweise abgeflachten Kanten **8** an der dem Zapfen **3** gegenüberliegenden Seite auf, die zur Aufnahme einer Drehhilfe, wie z. B. einem Schraubenschlüssel dienen. Damit wird die Befestigung an dem Rohrleitungssystem erheblich erleichtert. Zur Abdichtung können zusätzlich Gummidichtungen oder Hanfdichtungen für das Gewinde eingesetzt werden. Es sind aber auch alle anderen Dichtungsmittel denkbar.

Auf den mit dem Rohrleitungssystem verbundenen Baustopfen **1** wird eine Verschlusskappe **10** gemäß Figur **2**, ebenfalls unter Zuhilfenahme eines Dichtungsmittels, druckdicht aufgeschraubt. Die Verschlusskappe **10** weist ein Außengewinde **11** auf, welches in das Innengewinde **9** des Baustopfens **1** einschraubbar ist. Es ist vorteilhaft, wenn auch die Verschlusskappe **10** abgeflachte Kanten **12** aufweist, womit das Einschrauben erleichtert wird.

Die Handhabung des Verschlussstopfens **10** wird weiter vereinfacht, wenn an dessen Außenseite mittels Aufnahme von Drehvorrichtungen, beispielsweise Schlitze zur Aufnahme von Schraubendrehern oder Innensechskantlöcher zur Aufnahme von Inbusschlüsseln, vorgesehen sind, die hier nicht im einzelnen gezeigt sind.

## Patentansprüche

1. Permanent-Baustopfen (1) für eine Öffnung in einer Rohrleitungsinstallation zur Verwendung als Zwischenstück mit:
• einer in Längsrichtung durchgehenden Öffnung (2),
• einem an einem Ende angebrachten Außengewinde (4) zur Befestigung an einer Rohrleitungsinstallation,
• einem innerhalb der durchgehenden Öffnung (2) des Baustopfens (1) vorhandenen Innengewinde (9) und
• in regelmäßigen Abständen angebrachten Markierungen (7) an der Aussenseite (6) des Baustopfens.

2. Baustopfen nach Anspruch 1, wobei die Markierungen (7) regelmäßige Abstände zwischen 5 mm und 10 mm aufweisen.

3. Baustopfen nach einem der vorhergehenden Ansprüche, wobei die Markierungen (7) als Ringnuten ausgeprägt sind, die das Angreifen eines Schneidwerkzeuges zum Kürzen erleichtern.

4. Baustopfen nach einem der vorhergehenden Ansprüche, bei dem die Außenumfangsfläche (6) im wesentlichen zylindrisch aufgebaut ist.

5. Baustopfen nach einem der vorhergehenden Ansprüche, bei dem die dem mit Außengewinde (4) versehenen Ende in Längsrichtung gegenüberliegende Ende mit Kanten (8) versehen ist, wobei die Querschnittsfläche der Kanten (8) nicht über die Querschnittsfläche des übrigen Baustopfens hinausragt.

6. Baustopfen nach dem vorhergehenden Anspruch, wobei das Kanten (8) aufweisende Ende des Baustopfens als Sechskant ausgebildet ist.

7. Baustopfen nach einem der vorhergehenden Ansprüche, der mit dem Außengewinde (4) versehene Teil des Bohrstopfens (1) als Zapfen (3) ausgebildet ist und einen kleineren Durchmesser als der übrigen Baustopfen aufweist.

8. Baustopfen nach einem der vorhergehenden Ansprüche, wobei Teile der Innenseiten Kanten zur Aufnahme von Drehhilfen aufweisen.

9. Baustopfen nach einem der vorhergehenden Ansprüche, wobei sich das Innengewinde (9) über den wesentlichen Teil der Öffnung des Baustopfens (1) bis hin zu dessen Ende erstreckt.

10. Baustopfen nach einem der vorhergehenden Ansprüche, der Hart-PVC aufweist.

11. Baustopfen nach einem der vorhergehenden Ansprüche, an dem an dem dem Außengewinde gegenüberliegenden Ende ein Verschlußstopfen (10) abdichtbar anbringbar ist.

12. Baustopfen nach einem der vorhergehenden Ansprüche, dessen Innengewinde (9) mit dessen das Außengewinde (4) kompatibel ist, so ausgebildet sind, daß das Außengewinde (4) eines weiteren Baustopfens in das Innengewinde (9) des anderen Baustopfens abdichtend einschraubbar ist.

13. Verschlußstopfen (10), der an einem Baustopfen (1) gemäß dem vorhergehenden Anspruch mittels eines Gewindes (11) anbringbar ist, der mindestens zwei Kanten, vorzugsweise einen Sechskant, aufweist.

14. Verschlußstopfen nach dem vorhergehenden Anspruch, dessen Querschnittsfläche nicht über die Querschnittsfläche eines Baustopfens (1) nach einem der Ansprüche 1 bis 10 hinausragt.

15. Verschlußstopfen nach einem der vorhergehenden Ansprüche 13 oder 14, der an seiner dem Außengewinde (4) gegenüberliegenden Kopfseite eine Vorrichtung zur Aufnahme von Drehhilfen aufweist, vorzugsweise Schlitze oder Innensechskantlöcher zur Aufnahme von Schraubendrehern oder Imbusschlüsseln.
